# EUROPEAN PATENT SPECIFICATION

(11) **EP 1 977 639 B1**
(45) Date of publication and mention of the grant of the patent: **06.03.2013**
(21) Application number: 06708840.1
(22) Date of filing: 23.01.2006
(51) Int. Cl.: A01D 34/42

(54) **DOUBLE-HELIX TOOL AND LAWNMOWER THAT INCORPORATES SUCH A TOOL**
DOPPELHELIXWERKZEUG UND EIN SOLCHES WERKZEUG UMFASSENDER RASENMÄHER
OUTIL DOUBLE HÉLICOÏDAL ET TONDEUSE À GAZON COMPRENANT CET OUTIL DOUBLE HÉLICOÏDAL

(43) Date of publication of application: 08.10.2008
(73) Proprietor: Esmoris Bertoa, José Antonio, 46020 Valencia (ES)
(72) Inventor: Esmoris Bertoa, José Antonio, 46020 Valencia (ES)
(74) Representative: Carpintero Lopez, Francisco
(86) International application number: PCT/ES2006/000021
(87) International publication number: WO 2007/082964

(56) References cited:
- ES-A1- 8 702 109
- FR-A1- 2 645 700
- US-A- 2 665 539
- US-A- 2 715 808
- US-A- 3 979 887
- US-A- 4 481 757
- US-A- 5 353 881
- US-B1- 6 318 059

## Description

### OBJECT OF THE INVENTION

The present invention relates to a cutting tool which incorporates two helicoidal rotors, which is susceptible to being used to cut grass and other vegetable cutting applications, for example, for the cleaning of scrublands and others.

Also object of the invention is the actual lawnmower machine which incorporates said double-helicoidal tool.

### BACKGROUND OF THE INVENTION

For the type of tool used, lawnmowers on the market can be grouped into two types, those that have a rotary tool and those equipped with a helicoidal tool. Those whose axis of rotation is perpendicular to the cutting surface (to the ground) are called rotary tools, and helicoidal tools are those others wherein the axis of rotation is parallel to the cutting level (to the ground) and which consist of blades in the form of helical arches, mounted so that their sheathing shell makes up a cylinder.

Rotary tools cut thanks to the fact that the blade rotates at a high speed and "collides" with the grass. Patent of invention US2071872 discloses a rotary machine with a vacuum function incorporated, wherein the tool rotating at a high speed creates an overpressurisation which directs the grass towards a collector with the help of a casing. An improvement on this machine is disclosed in patent of invention US435567 wherein the main innovation relates to the fact that the tool is a disco whereupon are mounted blades constructed of a flexible material.

The operating principle of the helicoidal tools is that of scissors, cutting by shearing; when the rotor turns, its blades brush by the other blade which is attached to the chassis of the machine, trapping the grass between them and cutting it as scissors would cut it. A tool of this type is disclosed in the patent of invention US0280883 used for a forage cutting machine. In the utility model ES 1043864, a reaping machine with standard helicoidal tool is claimed whose most outstanding innovation is that of incorporating a hydraulic transmission, and that of incorporating a roller situated in front of the tool which incorporates blades which cut vertically, being of special utility to cut vegetables disposed horizontally, as is the case of tall and fallen grass. US-A-3979887 discloses a double helicoïdal tool according to the preamble of claim 1.

The main advantages and drawbacks of one and the other, referring exclusively to the cutting function, are as follow:
- The rotary machines have the advantage that for an acceptable operation "fine" adjustments are not necessary, nor is much maintenance (sharpening of the blades), their price is low and their efficiency is minimal (lots of energy is invested for the cutting).
- The advantage of the helicoidal machines refers to that both the efficiency as well as the quality are much greater, their drawback is that they need much more maintenance (sharpening of the blades and adjustment of the separation between the mobile blades and the fixed blade). This is due to their design given that for the correct operation of a helicoidal machine it is necessary that the two blades, that which is mounted on the rotor and the fixed one, touch each other, which results in wear and tear and the need to readjust the separation therebetween.
- Comparing power consumption orders and therefore efficiency, a 1 HP helicoidal machine can perform the same work as a 5HP rotary machine.
- Regarding the scope of application, in general, the rotary machines are used for small-scale applications, of an "amateur", and the helicoidal machines are those used for professional applications, golf courses, football pitches, professional gardening, etc.

In the past few years, parallel to the growth of the electronic control industry, there have appeared on the market autonomous lawnmower machines, i.e. machines which have electricity as source of energy and which are equipped with batteries which can function without human operation, by way of robots. Manufacturers of these machines are, amongst others, FRIENDLY ROBOTICS, ELECTROLUX, ZUCHETTI, TORO and HUSQUARNA. These machines are direct derivations of the classic rotary lawnmowers and the innovations are basically in the control function. One of these machines is disclosed in the patent of invention EP1100305, which consists of a machine with a rotary tool and 3 wheels, one front (idle wheel) and two rear wheels, having an electric motor exclusively to make the tool rotate. Patent of invention W00170009 claims a tool which is at the same time an array or assembly of several rotary tools having as its main characteristic that each one of them is actuated by one motor exclusively.

In regard to operation, the autonomous machines are different for the classic lawnmower machines in that these implement necessarily two functions, that of movement (driving and direction) and that of cutting, while the classic machines implement the cutting function and in general, though not necessarily, the functions of collecting and that of driving, reserving that of direction only for large machines, for those which are moved by an operator.

In any of them, for the implementation of the function of movement, there are two alternative possibilities: either two electric motors can be used, one attached to each wheel, or use one and construct a complex mechanism based on kinematic chains, clutches, etc., which takes us to if one wants to reduce the mechanical parts to a minimum (reduction of weight, cost, etc.), one has to propose the design of an autonomous machine at least with three motors, of which the third is necessary for the cutting tool. Effectively, there are, in general, machines available on the market of the abovementioned manufacturers and represented by the machine disclosed in the patent of invention EP1100305.

On the other hand, the explanation of why all of the machines available on the market are equipped with rotary tools lies in the fact that these types of machines do not collect the remains of the cut grass and increase the cutting frequency of the grass to leave the minimum amount of remains and favour their use as fertilizer.

The drawback is that this mode of operation entails an increase of the maintenance of the tool, which is what in practice makes the use of helicoidal tools in autonomous machines impossible.

Therefore, the ideal design conditions which have to be satisfied by a cutting tool for its application to an autonomous lawnmower machine relate to the following:
1) That the cutting quality and the efficiency are those of a helicoidal tool (maximising autonomy)
2) That the maintenance is that of a rotary tool (minimising the maintenance and therefore the intervention of the user)
3) That it permits the construction of a lawnmower machine capable of performing the cutting and moving (driving and direction) functions only with two electric motors, and which permits the moving function with a minimum of mechanical components (minimising the mass and the cost)

### DESCRIPTION OF THE INVENTION

The double-helicoidal tool which constitutes the object of this invention complies with the requirements set out, being of special application for autonomous lawnmower machines.

The tool is fundamentally made up of two rotors, each one of them formed by an axis of rotation whereto is linked at least one helix-shaped blade, the axes of rotation parallel to each other and parallel to the ground or lawn to be mowed and separated by a distance less than the sum of the radii of the helixes of each one of the rotors, wherein the blade(s) of one of the rotors has/have the shape of a right hand helix and the blade(s) corresponding to the other rotor display the shape of a left hand helix, as well as one of the rotors consisting of a driving rotor and the other consisting of a driven rotor.

The driven rotor must be submitted to a load which actuates in the braking mode, defining a cutting counter torque necessary to cut the grass, which shall be function of the sharp part of the blades of one of the rotors.

The N helix-shaped blades of a same rotor, all with the same radius and turned at the same angle, are distributed around its leading axle 360°/N.

In a preferred mode, it is considered that there is a reduction between the driving rotor and the driven rotor, wherein, for example, the driving rotor has a single blade with a 360°-rotated helix shape and the driven motor has N 360°/N leading helix-shaped blades. In this case, the rotation of one complete turn of the driving rotor determines the rotation of the of the driven rotor an angle of 360°/N, thereby obtaining a gear ratio in the rotation coinciding with the number of blades N of the driven rotor.

When designing the tools, it is considered as a premise that the rotors are as compact as possible, with reduced diameters and that the gear ratio is maximum, so that the driving rotor should preferably have a single blade and the driven rotor should have a greater number of blades so that the two rotors, in addition to acting as a tool, act as a reduction gear.

On the other hand, it is considered that there is a maximum clearance between the driving rotor blade and the driven rotor blade, so that the grass can be trapped between the blades of both rotors and cut.

There is the possibility that the blades have the shape of a partial helix (rotor with more than one blade) or a complete 360° (rotor with a single blade) and in one possible embodiment, the blades can consist of V-shaped helicoidal blades (one half of the blade right handed and the other half left handed).

In a preferred embodiment, it is considered that the blades of one of the rotors incorporates a primitive diameter coinciding with the outer diameter, in this case these blades can be called cutting blades, while in the case wherein said diameters are different, the blades would be called pushing blades. Therefore, different combinations between blades of one and the other rotor are considered, as long as at least one of the rotors, whether the driven or the conductor, has cutting blades.

The pushing blades are manufactured with materials which support their brushing with the cutting blades, and the cutting blades are conceived of materials whose toughness permits for minimal maintenance. The cutting blades are sharpened with the aim that the force necessary to cut the grass is as small as possible, as well as to reduce the maintenance costs.

On the other hand, it must be noted that the blades can be obtained preferably in steel, in plastic materials or in compound materials.

In a preferred solution it is considered that the driving rotor is actuated by a motor, such as an electric motor supplied by battery or by means of the supply network, and that the tool transmits its movement to a wheel through the driven rotor. Complementarily, the possibility is considered wherein the tool incorporates a reducer which is situated between the motor and the driving rotor or in an alternative or preferred complementary embodiment it is situated at the outlet of the driven rotor before the wheel whereto the tool can be linked.

In relation to the known helicoidal tools it should be noted that, unlike these, the double-helicoidal tool proposed by this invention incorporates the blades in corresponding rotary elements, rotors, and that said blades cut by the pressure exerted therebetween, as well as to point out that the double-helicoidal tool itself features a double use, as a tool and as a transmission element.

Regarding its function as a transmission element, it should be noted that this double-helicoidal tool, given that the force between the driving rotor and the driven rotor is not applied perpendicularly to the axis, there is an axial push which instead of being damaging for the operation of the machine, is equal to a resisting force offered by the bearings whereupon rotates the axle of the tool and which is added to the torque associated to the weight of the machine, guaranteeing that there is the counter torque necessary to ensure the cutting of the grass.

In relation to the machine which incorporates the double-helicoidal tool previously described, it should be noted that it has a chassis suitable to mount at least one pair of parallel wheels and at least one idle wheel, wherein at least one of the parallel wheels is linked to the driven rotor of at least one tool.

In one possible embodiment, the machine consists of a pair of wheels and one idle wheel and a single tool actuated by a single motor, which cuts the lawn with the machine moving in a straight line (it has the movement function but not that of direction).

In another possible solution, the machine can incorporate two parallel wheels and one or two idle wheels, having two motors, each one of them linked to corresponding tools which are associated, in turn, with the parallel wheels which will constitute the power wheels. The independent regulation of the movement of each one of the tools and wheels shall therefore determine the control of the machine's direction.

For this last solution, it is likewise considered that the driving rotor in a tool is left handed and the driven rotor is right handed and in the other tool this situation is reversed with the aim of cancelling out the axial pushes and provide greater stability to the machine, since in the event that the two equal tools are used, the machine would have a tendency to move towards one side.

The machine can incorporate a collection basket whereto the remains of the cut grass would stop.

### DESCRIPTION OF THE DRAWINGS

In order to complement the description being carried out and with the aim of helping towards a better comprehension of the characteristics of the invention, in accordance with an example of a preferred practical embodiment thereof, accompanying said description as an integral part thereof is a set of drawings wherein the following has been represented in an illustrative and non-limitative manner:
- Fig. 1: shows a schematic view of the rotors which compose a double-helicoidal tool provided with a conductor and a driven rotor which incorporate blades of the same radius.
- Fig. 2: shows a schematic view of a double-helicoidal tool with conductor and driven rotor provided with blades of different radii.
- Fig. 3: shows a schematic view of a double-helicoidal tool provided with two speed reducers, the first linking the motor with the driving rotor and the second linking the wheel with the driven rotor.
- Fig. 4: shows a side view wherein can be observed a driving rotor and a driven rotor attached, wherein the driving rotor has a blade and the driven rotor has four blades wherein the primitive diameters (Dp, dp) and the outer diameters (De, de) are indicated.
- Fig. 5.1: shows a solution of the tool wherein the blade of the driving rotor and that of the driven rotor are cutting blades.
- Fig. 5.2: shows a solution of the tool wherein the blade of the driving rotor consists of a pushing blade and the blades of the driven rotor consist of cutting blades.
- Fig. 5.3: shows a solution of the tool wherein the blade of the driving rotor consists of a cutting blade and the blades of the driven rotor consist of pushing blades.
- Fig. 6: shows a side schematic view of a lawnmower machine provided with at least one idle wheel and at least one driving wheel, being attached to the latter the tool with its reducing gear.
- Fig. 7: shows a schematic view of a lawnmower machine provided with two trailer wheels and two idle wheels, wherein the trailer wheels are associated to corresponding tools of V-shaped helicoidal blades.
- Fig. 8: shows an elevational view of the machine represented in the previous figure wherein can be observed the two tools associated to respective wheels.
- Fig. 9: shows a detailed view of figure 6 wherein a possible solution for the transmission of the motor to the tool (to the conductor) and of the tool (of the driven) to the wheel of a lawnmower machine is shown.
- Fig. 10: shows a schematic view of a lawnmower machine of 4 tools provided with an articulated chassis.
- Fig. 11: shows a schematic view of a lawnmower machine formed by several modules of tools grouped on rigid chasses which articulate therebetween.

### PREFERRED EMBODIMENT OF THE INVENTION

In view of the figures, below is described a preferred embodiment of the invention relating to a double-helicoidal tool and to the lawnmower machine which includes said tool.

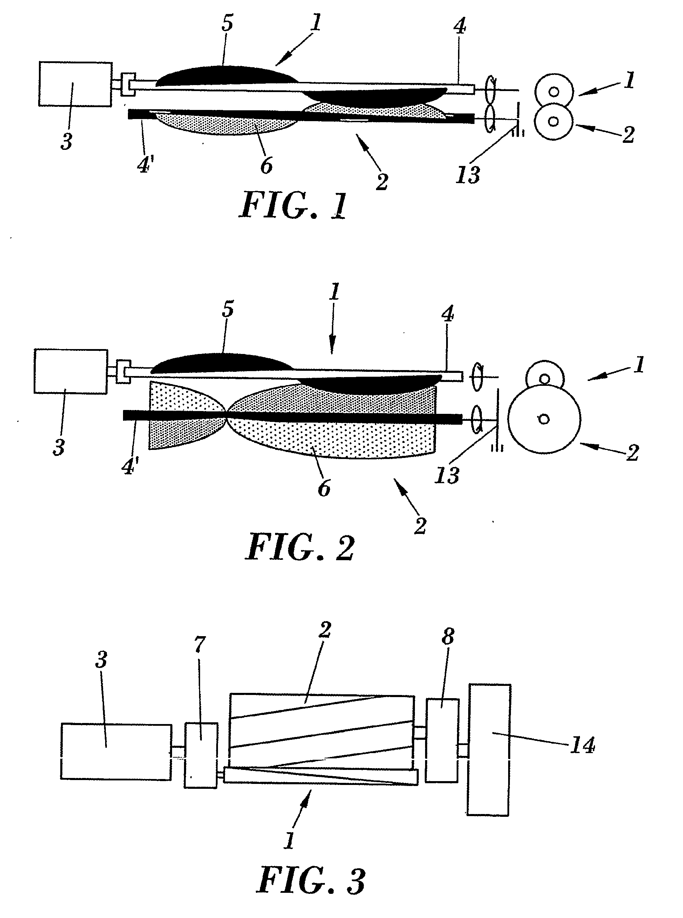

In figure 1, it can be observed that the tool is configured by means of two rotors (1, 2), each one of them formed by a blade (5, 6) with 360° helix shape and a rotational axis (4, 4'), said rotational axes (4, 4') being parallel to each other and parallel to the ground or lawn to be mowed and separated by a distance less than the sum of the radii of the helices of each one of the blades (5, 6).

It is observed than each one of the rotors (1, 2) consists of a driving rotor (1) associated to a motor (3), and the other rotor (1, 2) consists of a driven rotor (2), wherein one of the blades (5, 6) has the shape of a right handed helix and the other blade (6, 5) has the shape of a left handed helix.

In figure 2, it is observed that the driving rotor (1) and the driven rotor (2) have a different number of blades (5, 6) and that its radii are different, likewise respecting that the distance between the axes of rotation (4, 4') of each one of said rotors (1, 2) is less than the sum of the radii of the blades (5, 6). As is observed in figure 2, the number of blades of the driven rotor (2) is greater than the number of blades of the driving rotor (1), so the tool has a double function, that of the actual tool and that of the speed reducer.

In both figures 1 and 2, also represented is the need to incorporate a braking mechanism (13) which actuates on the driven rotor (2), so that the force applied by the driving rotor (1) to make the driven rotor (2) turn is equal to or greater than that necessary to cut the grass trapped between the blades (5, 6) of both rotors.

On the other hand, in figure 3, the tool associated to a wheel (14) is observed wherein the incorporation, between the motor (3) and the driven rotor (2) of, a transmission mechanism (7) which, in turn, can be a speed reducer, and between the driven rotor (2) and the wheel (14) of, a speed reducer (8), which also, in turn, is a transmission element, is observed.

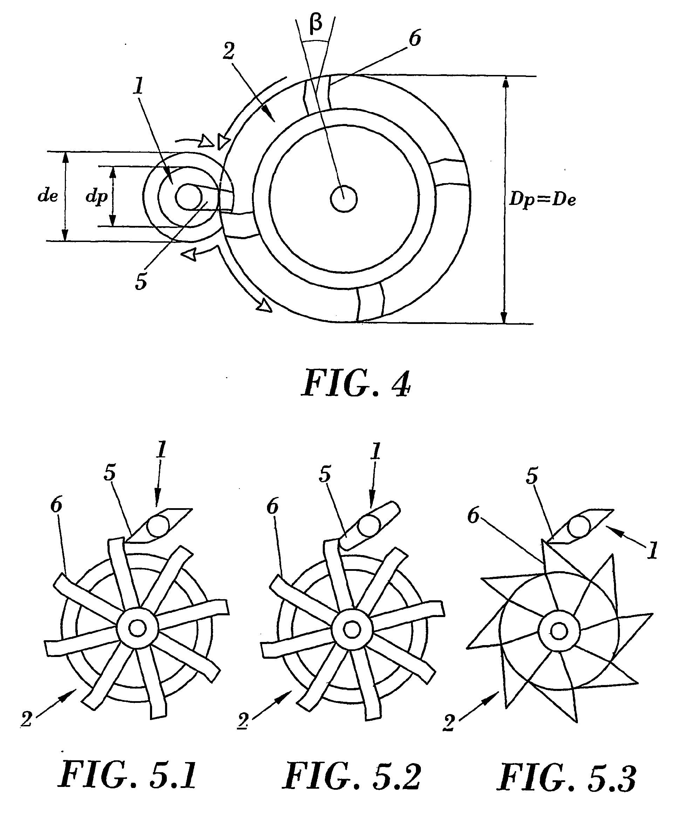

Figure 4 shows the driving rotor (1) provided with a single blade (5) wherein the primitive diameter dp is less than the diameter dₑ, therefore considering this blade (5) of the driving rotor (1) as a pushing blade, which upon rotating makes contact with a point against one of the four blades (6) which form past of the driven rotor (2), which have a primitive diameter Dp coinciding with the outer diameter De, these latter blades (6) being considered as cutting blades equipped with an angle β respect to the radial direction of the driven motor (2).

In figures 5.1 to 5.3 different possible solutions are considered wherein cutting blades are combined with pushing blades for the conductor (1) and driven (2) rotors.

Specifically in figure 5.1 the blade (5) of the driving rotor (1) constitutes a cutting blade and the blades (6) of the driven rotor (2) also constitute cutting blades. In figure 5.2, the blade (5) of the driving rotor (1) constitutes a pushing blade and the blades (6) of the driven rotor (2) constitute cutting blades. In figure 5.3, the blade (5) of the driving rotor (1) constitutes a cutting blade and the blades (6) of the driven rotor (2) constitute pushing blades.

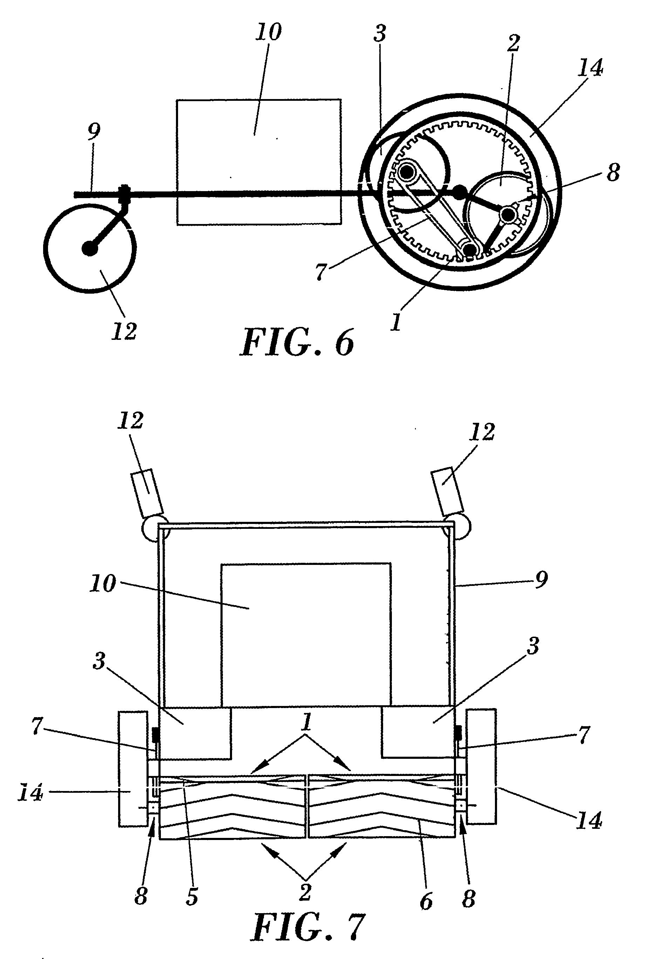

The lawnmower machine has been represented in schematic manner according to a side view in figure 6, wherein one can distinguish a specific embodiment thereof wherein are observed idle wheels (12) and power wheels (14) whereupon is mounted the chassis (9) of the machine, and a motor (3), in this case electric supplied by means of a battery (10).

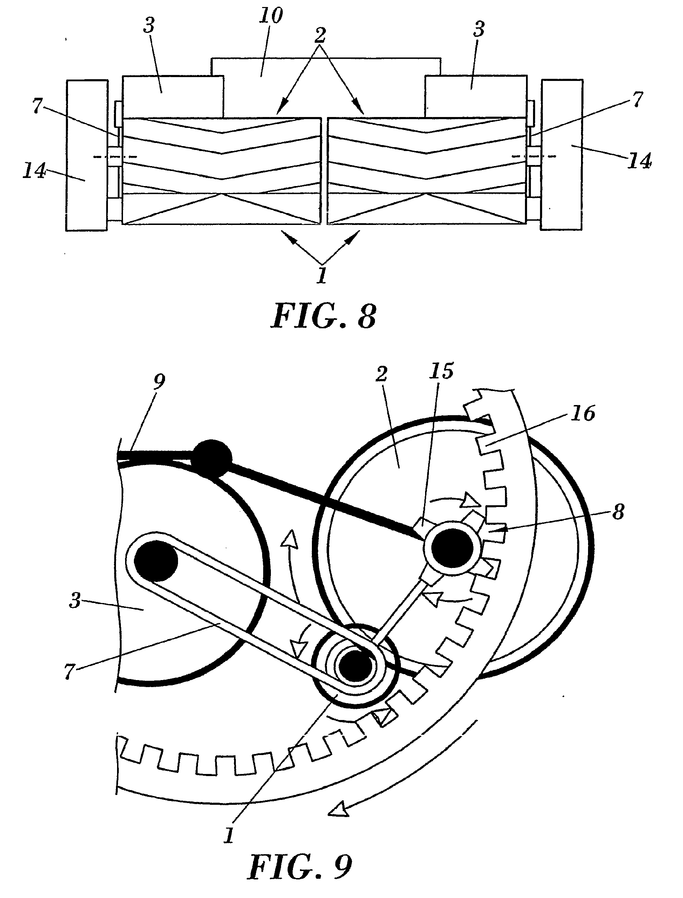

In this machine is observed, in figure 6 or in the detail of figure 9, that the motor (3) transmits the movement to the driving rotor (1) with intermediation of a transmission mechanism (7), which for example could consist of a belt, and the driven rotor (2) transmits the movement to the wheel (14) with intermediation of a speed reducer (8), which for example can consist of a gear formed by a pinion (15) mounted on the axle of the driving rotor (2) which gears to a toothed wheel (16) located inside the wheel (14).

In another view represented in figure 7, which corresponds to a plan of the previous figure, the lawnmower machine is observed equipped with two tools connected to respective wheels (14) for a solution wherein the blades (5, 6) adopt a helicoidal V-shaped configuration. This same configuration is observed in an elevational view of the previous figure corresponding to figure 8.

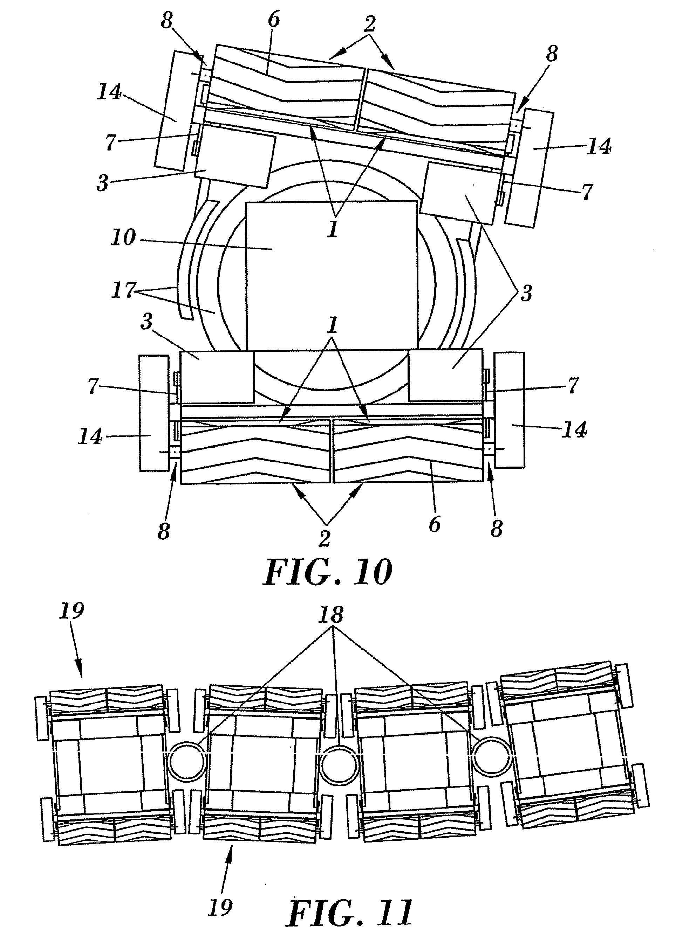

On the other hand, it is observed in figure 10 a lawnmower machine equipped with tools connected to each one of its four wheels (14), when are made up of power wheels, showing a possible solution wherein the chassis (9) is provided with an articulation (17) which allows the turning of the front wheels (14) to be carried out with respect to the rear wheels (14). Likewise, the chassis (9) could also consist of a rigid chassis and/or articulated by other points which would allow, for example, the swinging of the wheels (14) in the vertical plane.

In another possible solution of the lawnmower machine, the possibility is considered that this is configured by modules provided with one or more wheels (14), in figure 11 the case of four wheels (14) is represented, mounted on a chassis (9). These modules appear associated though articulations (18) which permit the relative rotation therebetween or in an embodiment not represented they could be joined rigidly therebetween.

## Claims

1. Double-helicoidal tool made up of two rotors (1, 2), each one of them formed by an axis of rotation (4, 4') whereto is linked at least one helix-shaped blade (5, 6), the axes of rotation (4, 4') parallel to each other and parallel to the ground or lawn to be mowed and separated by a distance less than the sum of the radii of the helices of each one of the rotors (1, 2), wherein the blade(s) (5, 6) of one of the rotors (1, 2) has/have the shape of a right handed helix and the blade(s) (6, 5) corresponding to the other rotor (2, 1) show(s) the shape of a left handed helix, and one of the rotors (1, 2) consists of a driving rotor (1) and the other consists of a driven rotor (2) **characterised in that** the driven rotor (2) has a greater number of blades (6) than the driving rotor (1) so that the two rotors act as a reduction gear.

2. Double-helicoidal tool according to claim 1, **characterised in that** the N blades (5, 6) of a same rotor (1, 2) are situated around the axis of rotation (4, 4') of said rotor (1, 2) with the shape of a helix with a 360°/N offset and have the same radii.

3. Double-helicoidal tool according to previous claims, **characterised in that** the driving rotor (1) is actuated by a motor (3).

4. Double-helicoidal tool according to previous claims, **characterised in that** it incorporates a reducer (8) which is situated at the outlet of the driven rotor (2).

5. Double-helicoidal tool according to previous claims, **characterised in that** it incorporates a reducer (7) which links the motor (3) to the driving rotor (1).

6. Double-helicoidal tool according to previous claims, **characterised in that** the blades (5, 6) of one of the rotors (1, 2) incorporate a primitive diameter coinciding with the outer diameter, said blades (5, 6) constituting cutting blades.

7. Double-helicoidal tool according to previous claims, **characterised in that** the blades (5, 6) of one of the rotors (1, 2) incorporate a primitive diameter different from the outer diameter, said blades (5, 6) constituting pushing blades.

8. Double-helicoidal tool according to previous claims, **characterised in that** the blades (5, 6) show a partial helix shape.

9. Double-helicoidal tool according to claims 1 to 7, **characterised in that** the blades (5, 6) show a complete 360° helix shape.

10. Double-helicoidal tool according to claims 1 to 6, **characterised in that** the blades (5, 6) consist of helicoidal V-shaped blades wherein half of each one of the blades has a right handed shape and the other half has a left handed shape.

11. Double-helicoidal tool according to previous claims, **characterised in that** the driving rotor (1) has a single blade (5).

12. Lawnmower machine which has a chassis (9) mounted on at least a pair of parallel wheels (14) **characterised in that** it incorporates the double-helicoidal tool described in claims 1 through 11 associated to at least one of the parallel wheels (14).

13. Lawnmower machine according to claim 12, **characterised in that** it has two tools linked to corresponding wheels (14), disposed in parallel.

14. Lawnmower machine according to claims 12 and 13, **characterised in that** it additionally has at least one idle wheel (12).

15. Lawnmower machine according to claim 13, **characterised in that** one of the tools associated to a wheel (14) has its driving rotor (1) left handed and its driven motor (2) right handed and the other tool, associated to the wheel (14) parallel to the previous, has its driving rotor (1) right handed and its driven rotor (2) left handed.

16. Lawnmower machine according to claim 12, **characterised in that** it comprises at least one module (19) formed by four wheels (14), mounted on the chassis (9), consisting of two front parallel wheels (14) and two rear parallel wheels (14), at each one of which is associated a tool.

17. Lawnmower machine according to claim 16, **characterised in that** the chassis (9) has a middle articulation (17) which permits the rotation of the front wheels with respect to the rear wheels.

18. Lawnmower machine according to claim 16, **characterised in that** it comprises several modules (19) rigidly associated therebetween.

19. Lawnmower machine according to claim 16, **characterised in that** it comprises several modules (19) wherebetween are articulations (18) which permit the relative rotation between modules.

## Patentansprüche

1. Doppelhelixwerkzeug bestehend aus zwei Rotoren (1, 2), die jeweils aus einer Drehachse (4, 4') gebildet sind, mit welcher mindestens eine schraubenlinienförmige Klinge (5, 6) verbunden ist, wobei die Drehachsen (4, 4') zueinander parallel und zu dem zu mähenden Boden oder Rasen parallel sind und um eine Entfernung voneinander beabstandet sind, die geringer als die Summe der Radien der Schraubenlinien jedes der Rotoren (1, 2) ist, wobei die Klinge(n) (5, 6) eines der Rotoren (1, 2) die Form einer rechtsgängigen Schraubenlinie aufweist (-en)und die dem anderen Rotor (2, 1) entsprechende(n) Klinge(n) (6, 5) die Form einer linksgängigen Schraubenlinie aufweist (-en), und wobei einer der Rotoren (1, 2) aus einem Antriebsrotor (1) besteht und der andere aus einem angetriebenen Rotor (2) besteht, **dadurch gekennzeichnet, dass** der angetriebene Rotor (2) eine größere Anzahl an Klingen (6) aufweist als der Antriebsrotor (1) so dass die beiden Rotoren als Untersetzungsgetriebe wirken.

2. Doppelhelixwerkzeug nach Anspruch 1, **dadurch gekennzeichnet, dass** die N Klingen (5, 6) des selben Rotors (1, 2) um die Drehachse (4, 4') des Rotors (1, 2) herum in Form einer Schraubenlinie mit einem Versatz von 360°/N angeordnet sind und den gleichen Radius aufweisen.

3. Doppelhelixwerkzeug nach einem der vorhergehenden Ansprüche, **dadurch gekennzeichnet, dass** der Antriebsrotor (1) durch einen Motor (3) betätigt ist.

4. Doppelhelixwerkzeug nach einem der vorhergehenden Ansprüche, **dadurch gekennzeichnet, dass** es einen Untersetzer (8) aufweist, der am Ausgang des angetriebenen Rotors (2) angeordnet ist.

5. Doppelhelixwerkzeug nach einem der vorhergehenden Ansprüche, **dadurch gekennzeichnet, dass** es einen Untersetzer (7) aufweist, welcher den Motor (3) mit dem Antriebsrotor (1) verbindet.

6. Doppelhelixwerkzeug nach einem der vorhergehenden Ansprüche, **dadurch gekennzeichnet, dass** die Klingen (5, 6) eines der Rotoren (1, 2) einen Grunddurchmesser aufweist, der mit dem Außendurchmesser zusammenfällt, wobei die Klingen (5, 6) Schneidklingen bilden.

7. Doppelhelixwerkzeug nach einem der vorhergehenden Ansprüche, **dadurch gekennzeichnet, dass** die Klingen (5, 6) eines der Rotoren (1, 2) einen Grunddurchmesser aufweist, der von dem Außendurchmesser verschieden ist, wobei die Klingen (5, 6) Räumklingen bilden.

8. Doppelhelixwerkzeug nach einem der vorhergehenden Ansprüche, **dadurch gekennzeichnet, dass** die Klingen (5, 6) eine teilweise Schraubenlinienform aufweisen.

9. Doppelhelixwerkzeug nach einem der Ansprüche 1 bis 7, **dadurch gekennzeichnet, dass** die Klingen (5, 6) eine die Form einer vollständigen 360°-Schraubenlinie aufweisen.

10. Doppelhelixwerkzeug nach einem der Ansprüche 1 bis 6, **dadurch gekennzeichnet, dass** die Klingen (5, 6) aus schraubenlinienförmigen V-förmigen Klingen bestehen, wobei eine Hälfte einer jeden Klinge eine rechtsgängige Form und die andere Hälfte einer jeden Klinge eine linksgängige Form aufweist.

11. Doppelhelixwerkzeug nach einem der vorhergehenden Ansprüche, **dadurch gekennzeichnet, dass** der Antriebsrotor (1) eine einzelne Klinge (5) aufweist.

12. Rasenmähmaschine mit einem Fahrwerk (9), das auf mindestens zwei parallelen Rädern (14) angebracht ist, **dadurch gekennzeichnet, dass** das in den Ansprüchen 1 bis 11 beschriebene Doppelhelixwerkzeug aufweist, welches mindestens einem der parallelen Räder (14) zugeordnet ist.

13. Rasenmähmaschine nach Anspruch 12, **dadurch gekennzeichnet, dass** sie zwei parallel angeordnete Werkzeuge aufweist, die mit entsprechenden Rädern (14) verbunden sind.

14. Rasenmähmaschine nach den Ansprüchen 12 und 13, **dadurch gekennzeichnet, dass** sie zusätzlich mindestens ein Freilaufrad (12) aufweist.

15. Rasenmähmaschine nach Anspruch 13, **dadurch gekennzeichnet, dass** bei einem der einem Rad (14) zugeordneten Werkzeuge der Antriebsrotor (1) linksgängig und der angetriebene Rotor (2) rechtsgängig ist, und bei dem anderen Werkzeug, das dem zu dem vorgenannten Rad parallelen Rad (14) zugeordnet ist, der Antriebsrotor (1) rechtsgängig und der angetriebene Rotor (2) linksgängig ist.

16. Rasenmähmaschine nach Anspruch 12, **dadurch gekennzeichnet, dass** sie mindestens ein durch vier Räder (14) gebildetes Modul (19) aufweist, das an dem Fahrwerk (9) angebracht ist und durch zwei vorderer parallele Räder (14) und zwei hintere parallele Räder (14) gebildet ist, denen jeweils ein Werkzeug zugeordnet ist.

17. Rasenmähmaschine nach Anspruch 16, **dadurch gekennzeichnet, dass** das Fahrwerk (9) ein Mittelgelenk (17) aufweist, welches das Drehen der vorderen Räder in Bezug auf die hinteren Räder ermöglicht.

18. Rasenmähmaschine nach Anspruch 16, **dadurch gekennzeichnet, dass** sie mehrere Module (19) aufweist, die untereinander starr verbunden sind.

19. Rasenmähmaschine nach Anspruch 16, **dadurch gekennzeichnet, dass** sie mehrere Module (19) aufweist, zwischen welchen sich Gelenke (18) befinden, welche eine relative Drehung zwischen Modulen ermöglichen.

## Revendications

1. Outil double hélicoïdal composé de deux rotors (1, 2), l'un d'entre eux formé par un axe de rotation (4, 4') auquel est relié au moins une lame en forme d'hélice (5, 6) les axes de rotation (4, 4') étant parallèles entre eux et parallèles au sol ou à la pelouse à tondre et séparés par une distance inférieure à la somme des rayons des hélices de chacun des rotors (1, 2), dans lequel la (les) lame(s) (5, 6) de l'un des rotors (1, 2) a/ont la forme d'une hélice à droite et la (les) lame(s) (6, 5) correspondant à l'autre rotor (2, 1) représente(nt) la forme d'une hélice à gauche et l'un des rotors (1, 2) se compose d'un rotor d'entraînement (1) et l'autre se compose d'un rotor entraîné (2), **caractérisé en ce que** le rotor entraîné (2) a un plus grand nombre de lames (6) que le rotor d'entraînement (1), de sorte que les deux rotors servent d'engrenage de réduction.

2. Outil double hélicoïdal selon la revendication 1, **caractérisé en ce que** les N lames (5, 6) d'un même rotor (1, 2) sont situées autour de l'axe de rotation (4, 4') dudit rotor (1, 2) avec la forme d'une hélice avec un décalage de 360°/N et ont les mêmes rayons.

3. Outil double hélicoïdal selon les revendications précédentes, **caractérisé en ce que** le rotor d'entraînement (1) est actionné par un moteur (3).

4. Outil double hélicoïdal selon les revendications précédentes, **caractérisé en ce qu'**il comprend un réducteur (8) qui est situé à la sortie du rotor entraîné (2).

5. Outil double hélicoïdal selon les revendications précédentes, **caractérisé en ce qu'**il comprend un réducteur (7) qui relie le moteur (3) au rotor d'entraînement (1).

6. Outil double hélicoïdal selon les revendications précédentes, **caractérisé en ce que** les lames (5, 6) de l'un des rotors (1, 2) comprennent un diamètre primitif coïncidant avec le diamètre externe, lesdites lames (5, 6) constituant les lames de coupe.

7. Outil double hélicoïdal selon les revendications précédentes, **caractérisé en ce que** les lames (5, 6) de l'un des rotors (1, 2) comprennent un diamètre primitif différent du diamètre externe, lesdites lames (5, 6) constituant les lames de poussée.

8. Outil double hélicoïdal selon les revendications précédentes, **caractérisé en ce que** les lames (5, 6) représentent une forme d'hélice partielle.

9. Outil double hélicoïdal selon les revendications 1 à 7, **caractérisé en ce que** les lames (5, 6) représentent une forme d'hélice complète à 360°.

10. Outil double hélicoïdal selon les revendications 1 à 6, **caractérisé en ce que** les lames (5, 6) se composent de lames hélicoïdales en forme de V, dans lequel la moitié de chacune des lames a une forme à droite et l'autre moitié a une forme à gauche.

11. Outil double hélicoïdal selon les revendications précédentes, **caractérisé en ce que** le rotor d'entraînement (1) a une seule lame (5).

12. Tondeuse qui a un châssis (9) monté sur au moins une paire de roues parallèles (14), **caractérisée en ce qu'**elle comprend l'outil double hélicoïdal décrit dans les revendications 1 à 11, associé à au moins l'une des roues parallèles (14).

13. Tondeuse selon la revendication 12, **caractérisée en ce qu'**elle a deux outils reliés aux roues (14) correspondantes, disposés en parallèle.

14. Tondeuse selon les revendications 12 et 13, **caractérisée en ce qu'**elle a en outre au moins une roue intermédiaire (12).

15. Tondeuse selon la revendication 13, **caractérisée en ce que** l'un des outils associés à une roue (14) a son rotor d'entraînement (1) à gauche et son moteur entraîné (2) à droite et l'autre outil, associé à la roue (14) parallèle à la précédente, a son rotor d'entraînement (1) à droite et son rotor entraîné (2) à gauche.

16. Tondeuse selon la revendication 12, **caractérisée en ce qu'**elle comprend au moins un module (19) formé par quatre roues (14) montées sur le châssis (9), se composant de deux roues avant parallèles (14) et de deux roues arrière parallèles (14), à chacune desquelles est associé un outil.

17. Tondeuse selon la revendication 16, **caractérisée en ce que** le châssis (9) a une articulation centrale (17) qui permet la rotation des roues avant par rapport aux roues arrière.

18. Tondeuse selon la revendication 16, **caractérisée en ce qu'**elle comprend plusieurs modules (19) rigidement associés entre eux.

19. Tondeuse selon la revendication 16, **caractérisée en ce qu'**elle comprend plusieurs modules (19) entre lesquels se trouvent des articulations (18) qui permettent la rotation relative entre les modules.
